# EUROPÄISCHE PATENTSCHRIFT

(11) **EP 3 692 268 B1**
(45) Veröffentlichungstag und Bekanntmachung des Hinweises auf die Patenterteilung: **04.12.2024**
(21) Anmeldenummer: 18795585.1
(22) Anmeldetag: 30.10.2018
(51) Int. Cl.: F16B 12/18, F16B 12/20, F16B 12/26

(54) **VERANKERUNGSBESCHLAG ZUR VERANKERUNG IN EINEM WERKSTÜCK**
ANCHOR FITTING FOR ANCHORING IN A WORKPIECE
ARMATURE D'ANCRAGE POUR L'ANCRAGE DANS UNE PIÈCE

(30) Priorität: 06.11.2017 DE 102017125877
(43) Veröffentlichungstag der Anmeldung: 12.08.2020
(73) Patentinhaber: Festool GmbH, 73240 Wendlingen (DE)
(72) Erfinder: CAPUTO, Jonathan, 71229 Leonberg (DE); MAJER, Michael, 73274 Notzingen (DE)
(74) Vertreter: Patentanwälte Bregenzer und Reule Partnerschaftsgesellschaft mbB
(86) Internationale Anmeldenummer: PCT/EP2018/079646
(87) Internationale Veröffentlichungsnummer: WO 2019/086415

(56) Entgegenhaltungen:
- WO-A1-2017/005632
- DE-A1- 102009 011 845
- DE-A1- 102015 100 199
- DE-B3- 102006 024 265

## Beschreibung

Die Erfindung betrifft einen Verankerungsbeschlag zur Verankerung in einem Werkstück, wobei der Verankerungsbeschlag einen Zuganker zur Anordnung in einer Verbindungsausnehmung des Werkstücks und einen Widerlagerkörper zur Anordnung in einer mit der Verbindungsausnehmung kommunizierenden Widerlagerausnehmung des Werkstücks aufweist, wobei der Widerlagerkörper eine Steckaufnahme zum Einstecken eines Steckabschnitts des Zugankers entlang einer Steckachse und eine Stützflächenanordnung zur Abstützung an der Widerlagerausnehmung des Werkstücks aufweist, wobei sich mindestens eine Stützfläche der Stützflächenanordnung, insbesondere etwa rechtwinkelig, quer zu einer Längsachse des in die Steckaufnahme eingesteckten Zugankers erstreckt, sodass der Zuganker bezüglich seiner Längsachse an der Widerlagerausnehmung abgestützt ist, wobei der Verankerungsbeschlag einen Klemmkörper zum Verklemmen des Steckabschnitts des Zugankers in der Steckaufnahme aufweist, und wobei mindestens ein Stützkörper des Verankerungsbeschlags eine Flachgestalt mit einander gegenüberliegenden Flachseiten und sich zwischen den Flachseiten erstreckenden, insbesondere gerundeten, Schmalseiten zur zumindest abschnittsweise formschlüssigen Abstützung in der Verbindungsausnehmung oder der Widerlagerausnehmung des Werkstücks aufweist, wobei die Steckaufnahme quer zur Steckachse eine zum Ausrichten des Zugankers bezüglich des Widerlagerkörpers geeignete Ausricht-Querbreite aufweist, die größer als ein zum Einstecken des Zugankers in die Steckaufnahme notwendiges Bewegungsspiel ist.

Ein derartiger Verankerungsbeschlag ist beispielsweise in DE 10 2015 100 199 A1 erläutert. Bei diesem Verankerungsbeschlag handelt es sich um einen Verbindungsbeschlag zur Verbindung zweier Werkstücke, beispielsweise Möbelstücke. Der Zuganker hat eine stabförmige Gestalt und erstreckt sich somit entlang einer Längsachse und ist in den Widerlagerkörper einsteckbar. Der Widerlagerkörper hat eine Flachgestalt und ist in eine entsprechende Widerlagerausnehmung verdrehsicher einsteckbar. Der Zuganker ist typischerweise in einem Stützkörper eingehaust, der eine Flachgestalt aufweist, die im Prinzip geometrisch korrespondiert mit der Gestalt des Widerlagerkörpers, so dass eine feste, verdrehsichere und im Wesentlichen unverschiebliche Beschlagskonfiguration zur Aufnahme in den beiden Werkstückausnehmungen, der Verbindungsausnehmung und der Widerlagerausnehmung, gegeben ist.

Allerdings muss sehr präzise gearbeitet werden, damit der Verankerungsbeschlag bzw. Verbindungsbeschlag tatsächlich in die Werkstück-Ausnehmungen hinein passt und das Gegenstück, das andere Werkstück, entsprechend verbindbar ist. Aus DE 10 2009 011 845 A1 geht ein Verbindungsbeschlag mit einer Verankerungskörperanordnung und einem Zugelement sowie einem Haltekörper hervor, der mit einem ersten und zweiten Abschnitt an einem Innenumfang einer ersten Aufnahme und einer zweiten Aufnahme miteinander zu verbindender Werkstücke eingreift.

DE 10 2006 024 265 B3 erläutert eine Beschlagvorrichtung zum Verbinden von zwei Möbelteilen mit einem Spannmittel, welches einen Spannbolzen und ein Spannelement umfasst, welches zum Ausführen einer Spannbewegung in einem Beschlagteil der Beschlagvorrichtung bewegbar gelagert ist, welches eine Steckausnehmung zum Einstecken des Spannbolzens aufweist.

DE 94 90 402 U1 beschreibt eine Einrichtung mit einem weiblichen und einem männlichen Teil, welches einen Endabschnitt mit einem Dehnbereich zur Aufnahme im weiblichen Teil aufweist, wobei der Dehnbereich mehrere Konusabschnitte zum Aufweiten des weiblichen Teils enthält.

Ausgehend davon ist es die Aufgabe der vorliegenden Erfindung, einen verbesserten Verankerungsbeschlag bereit zu stellen.

Zur Lösung der Aufgabe ist ein Verankerungsbeschlag gemäß der technischen Lehre des Anspruchs 1 vorgesehen, wobei der mindestens eine Stützkörper eine Widerlagerkörper-Aufnahme für den Widerlagerkörper aufweist, in die der Widerlagerkörper im montierten Zustand des Verankerungsbeschlags eingreift.

Das Bewegungsspiel ist im Grunde der Abstand zwischen der Steckaufnahme und dem Steckabschnitt des Zugankers, der zu einem grundsätzlichen Einstecken des Steckabschnitts in die Steckaufnahme erforderlich ist. Das Bewegungsspiel ist diejenige lichte Weite zwischen der Steckaufnahme und dem Steckabschnitt des Zugankers, die erforderlich ist, um den Steckabschnitt in die Steckaufnahme einzustecken. Mithin muss also eine Querbreite der Steckaufnahme in jedem Fall ausreichen, dass der Steckabschnitt des Zugankers in die Steckaufnahme einsteckbar ist.

Es ist ein Grundgedanke der vorliegenden Erfindung, dass der Zuganker in an sich bekannter Weise in den Widerlagerkörper einsteckbar ist, jedoch dort ein gewisses Bewegungsspiel hat, das größer als ein zum Einstecken des Zugankers in die Steckaufnahme notwendiges Bewegungsspiel hat. Der Zuganker ist in der Steckaufnahme ausrichtbar, so dass gegebenenfalls nicht exakt angeordnete Werkstück-Ausnehmungen, beispielsweise Bohrungen zur Bildung der Verbindungsausnehmung und/oder der Widerlagerausnehmung, nicht ankommt. Aber auch für eine Ausrichtung zweier Werkstücke, nämlich des Werkstücks welches den Verankerungsbeschlag aufnimmt, sowie eines Werkstücks, welches mit dem Verankerungsbeschlag an dem ersten Werkstück zu befestigen ist, kommt es nicht in dem Maße an wie beim Stand der Technik der Fall.

Die mindestens eine Stützfläche der Stützflächenanordnung erstreckt sich quer zu einer Längsachse des in die Steckaufnahme eingesteckten Zugankers, z.B. rechtwinkelig oder etwa rechtwinkelig, insbesondere in einem Winkel von ca. 80°-100°, vorzugsweise 85°-95°.

Die Ausricht-Querbreite beträgt vorzugsweise mindestens 5%, vorzugsweise etwa 10% oder noch weiter bevorzugt etwa 20-30% mehr als eine Querbreite des Steckabschnittes des Zugankers. Mithin ist also eine lichte Weite der Steckaufnahme derart groß, dass der Zuganker mit seinem Steckabschnitt quer zu seiner Längsachse in einem weiten Bereich verstellbar bleibt.

Zweckmäßigerweise weist die Steckaufnahme quer, insbesondere rechtwinkelig quer, zu ihrer Ausricht-Querbreite eine bezüglich der Längsachse des Zugankers winkelige, insbesondere rechtwinkelige, Querhöhe auf. Die Querhöhe ist im Verhältnis zur Höhe des Steckabschnitts des Zugankers, der sozusagen die Querhöhe ausfüllt oder sich innerhalb der Querhöhe erstreckt, zweckmäßigerweise kleiner als die Ausricht-Querbreite im Verhältnis zu einer Querbreite des Steckabschnitts des Zugankers. Die Querhöhe weist zweckmäßigerweise ein zum Einstecken des Zugankers in die Steckaufnahme ausreichendes Bewegungsspiel auf. Das Bewegungsspiel beträgt zweckmäßigerweise ca. 1 bis 5 % einer Höhe des Steckabschnitts des Zugankers. Die Querhöhe erstreckt sich beispielsweise zwischen einer Bodenfläche und einer der Bodenfläche gegenüberliegenden Stützfläche oder einem Paar der Bodenfläche gegenüberliegenden Stützflächen der Steckaufnahme.

Eine oder mehrere Komponenten des Verankerungsbeschlags bestehen zweckmäßigerweise aus Metall, insbesondere der Widerlagerkörper und der Zuganker sowie zweckmäßigerweise der Klemmkörper. Es ist aber auch möglich, dass eine oder mehrere Komponenten des Verankerungsbeschlags aus Kunststoff bestehen, insbesondere aus einem Polyamid-Material oder dergleichen.

Der Klemmkörper ist zweckmäßigerweise bezüglich des Widerlagerkörpers entlang einer Klemmachse verstellbar, wobei sich die Ausricht-Querbreite quer zu der Klemmachse erstreckt. Die Klemmachse und die Längsachse des Zugankers, wenn dieser in die Steckaufnahme eingesteckt ist, sind vorzugsweise rechtwinkelig oder jedenfalls quer zueinander verlaufend. Mithin verlaufen also zweckmäßigerweise die Steckachse, die Klemmachse und die Längserstreckung der Querbreite oder die Querbreite rechtwinkelig zueinander. Aber auch eine schräge Anordnung wäre möglich, d.h., dass beispielsweise die Klemmachse schräg zur Steckachse verläuft. Des Weiteren ist es denkbar, dass die Klemmung nicht nur mit einem Klemmkörper, sondern mit mehreren Klemmkörpern erfolgt.

Der Klemmkörper liegt zweckmäßigerweise einer Bodenfläche der Steckaufnahme gegenüber. Mithin wird also der Klemmkörper zur Bodenfläche hin verstellt, wenn er seine den Zuganker in der Steckaufnahme verklemmende Klemmstellung einnehmen soll.

Die Steckaufnahme weist zweckmäßigerweise eine zur Aufnahme des Steckabschnittes des Zugankers vorgesehene Bodenfläche auf. Die Bodenfläche bildet sozusagen das Widerlager oder die Gegendruck-Fläche für den Klemmkörper.

Die Bodenfläche und/oder eine Auflage des Steckabschnittes des Zugankers zur Auflage auf der Bodenfläche sind zweckmäßigerweise Planflächen oder ebene Flächen. Insbesondere ist es vorteilhaft, wenn eine Auflage des Steckabschnittes des Zugankers und die Bodenfläche flächig und/oder verkippsicher aneinander anliegen. Es ist aber auch möglich, dass der Zuganker beispielsweise eine konkave Auflagefläche aufweist, die auf einer entsprechend konvexen Bodenfläche oder aber auch eine planen oder ebenen Bodenfläche der Steckaufnahme aufliegen kann.

Der Klemmkörper weist zweckmäßigerweise eine Klemmschräge, beispielsweise einen Klemmkonus, an seiner dem Steckabschnitt des Zugankers zugewandten Seite, beispielsweise seiner Stirnseite auf.

Der Klemmkörper umfasst zweckmäßigerweise eine Klemmschraube oder wird durch eine Klemmschraube gebildet. Es ist auch möglich, dass der Klemmkörper nicht unbedingt eine Klemmschraube ist, sondern ein anderer Körper, welcher jedoch einen Schraubabschnitt zum Einschrauben in den Widerlagerkörper aufweist. An dem Widerlagerkörper ist zweckmäßigerweise eine Schraubbohrung oder Schraubdurchtrittsöffnung vorgesehen, die winkelig, insbesondere quer oder rechtwinkelig, zu der Steckachse der Steckaufnahme verläuft.

Es ist weiterhin vorteilhaft, wenn die Steckaufnahme zur Bereitstellung der Ausricht-Querbreite in einem Bereich zwischen dem Klemmkörper und der Bodenfläche breiter als die Bodenfläche ist. Mithin hat also die Steckaufnahme eine vergleichsweise schmale Bodenfläche, jedoch eine Ausbuchtung oder mehrere Ausbuchtungen oberhalb der Bodenfläche oder in einem Bereich zwischen der Bodenfläche und dem Klemmkörper.

Die Steckaufnahme verläuft zweckmäßigerweise von der Bodenfläche schräg nach außen, beispielsweise gekrümmt, geradlinig oder dergleichen. Mithin weist also die Steckaufnahme von der Bodenfläche nach schräg außen, insbesondere gekrümmt verlaufende Seitenwandflächen auf. Es ist möglich, dass die Steckaufnahme nur an einer Seite eine derartige gekrümmte oder schräg verlaufende Seitenwandfläche aufweist, während die gegenüberliegende Seitenwandfläche beispielsweise nach innen zur Bodenfläche hin geneigt oder rechtwinkelig zur Bodenfläche sein kann.

Der Steckabschnitt des Zugankers weist zweckmäßigerweise eine Auflagefläche zur Auflage auf einer Bodenfläche der Steckaufnahme auf sowie mindestens einen in einer zu der Auflagefläche parallelen Ebene vorstehenden Vorsprung, der vor die Auflagefläche in Richtung der Ausricht-Querbreite vorsteht. Mithin ist also der Zuganker im Bereich der Auflagefläche schmaler als im Bereich des mindestens einen Vorsprungs. Der mindestens eine Vorsprung kann beispielsweise durch eine Betätigungskontur für ein Montagewerkzeug, beispielsweise eine Au-βenkant-Fläche gebildet sein. An dieser Stelle sei erwähnt, dass der Steckabschnitt insgesamt als ein Mehrkant, beispielsweise Vierkant, Fünfkant, Sechskant oder Achtkant, ausgebildet sein kann. Eine der Flächen zwischen den Kanten bildet in diesem Fall die Auflagefläche.

Die Stützflächenanordnung des Widerlagerkörpers weist zweckmäßigerweise mindestens zwei Stützflächen auf, die an einander entgegengesetzten Seiten vorgesehen sind und zur Abstützung quer, beispielsweise etwa rechtwinkelig quer, zu der Längsachse des Zugankers an der Widerlagerausnehmung vorgesehen sind. Mithin verlaufen die Stützflächen quer zur Längsachse des Zugankers. Die Stützflächen können gerade Stützflächen sein oder ebene Stützflächen sein. Bevorzugt weisen die Stützflächen eine Krümmung auf.

Die Stützflächenanordnung des Widerlagerkörpers weist zweckmäßigerweise mindestens eine Stützrippe und/oder eine Rippenstruktur zum Eingreifen in das Werkstück im Bereich der Widerlagerausnehmung auf. Die Stützrippen oder die mindestens eine Stützrippe können beispielsweise in das Werkstück, insbesondere ein Holz-Werkstück, eindringen und dort eine Art Verdrehsicherung realisieren.

Gemäß der Erfindung ist vorgesehen, dass der mindestens eine Stützkörper eine Widerlagerkörper-Aufnahme für den Widerlagerkörper aufweist, in die der Widerlagerkörper im montierten Zustand des Verankerungsbeschlags eingreift. Ergänzt sei noch, dass die Flachseiten quer zur Längsachse des Stützkörpers breiter als die Schmalseiten sind, beispielsweise zweimal so breit oder dreimal so breit.

Die Widerlagerkörper-Aufnahme kann beispielsweise eine Durchtrittsöffnung sein, durch die der Widerlagerkörper hindurchsteckbar ist. Es ist weiterhin möglich, dass die Widerlagerkörper-Aufnahme eine Art Sackloch oder Blindloch ist, in die der Widerlagerkörper einsteckbar ist.

Bevorzugt ist eine Ausführungsform bei der die Widerlagerkörper-Aufnahmen zwischen gabelförmig vorstehenden Armen des Stützkörpers vorgesehen sind. An den Armen des Stützkörpers sind zweckmäßigerweise die Schmalseiten vorgesehen. Insbesondere sind die Arme des Stützkörpers außenseitig, d.h. von der Widerlagerkörper-Aufnahme abgewandt, gerundet.

An mindestens einem Arm, beispielsweise aber auch beiden Armen, des Stützkörpers ist zweckmäßigerweise eine Linearführung, beispielsweise eine Führungsnut oder ein Führungsvorsprung zum Einführen des Widerlagerkörpers in die Widerlagerkörper-Aufnahme vorgesehen. Am Widerlagerkörper selbst sind zu der Linearführung passende Führungskonturen, beispielsweise ein Führungsvorsprung zum Eingriff in eine Führungsnut oder eine Führungsaufnahme zum Eingriff oder zur Aufnahme eines Führungsvorsprungs des Armes, vorhanden. So kann beispielsweise der Stützkörper quer zu einer Steckachse, mit der der Widerlagerkörper in die Widerlagerausnehmung des Werkstücks einsteckbar ist, des bereits in der Widerlagerausnehmung angeordneten Widerlagerkörpers eingesteckt werden.

An der Widerlagerkörper-Aufnahme und/oder dem Widerlagerkörper sind zweckmäßigerweise Verdrehsicherungskonturen, beispielsweise polygonale Verdrehsicherungskonturen, zum verdrehsicheren Aufnehmen des Widerlagerkörpers in der Widerlagerkörper-Aufnahme vorhanden. Somit kann also der Widerlagerkörper, wenn er sich in der Widerlagerkörper-Aufnahme des Stützkörpers befindet, nicht verdrehen. Das erleichtert beispielsweise die Betätigung des Klemmkörpers.

Die Widerlagerkörper-Aufnahme ist zweckmäßigerweise an mindestens einer Flachseite angeordnet oder erstreckt sich zwischen den Flachseiten des Stützkörpers. Mithin kann also der Widerlagerkörper beispielsweise von einer Flachseite des Stützkörpers her in diesen eingesteckt oder durch diesen durchgesteckt werden.

An dieser Stelle sei bemerkt, dass der Widerlagerkörper vorteilhaft an mindestens einer Seite, insbesondere einer Flachseite des Stützkörpers, vor den Stützkörper vorsteht. Weiterhin ist es zweckmäßig, wenn der Widerlagerkörper an einander entgegengesetzten Seiten, insbesondere Flachseiten des Stützkörpers, vor den Stützkörper vorsteht.

Weiterhin ist es vorteilhaft, wenn der Stützkörper eine Durchtrittsöffnung für den Zuganker aufweist. Die Durchtrittsöffnung weist zweckmäßigerweise zumindest im Bereich des Widerlagerkörpers ein Ausrichten des Zugankers in der Steckaufnahme ermöglichende Querbreite auf. Die Querbreite kann etwas geringer als die Ausricht-Querbreite sein. Vorteilhaft ist es aber, wenn die Querbreite der Durchtrittsöffnung für den Zuganker größer als die Ausricht-Querbreite der Steckaufnahme des Widerlagerkörpers ist.

Der mindestens eine Stützkörper ist zweckmäßigerweise zur Anordnung in der Verbindungsausnehmung vorgesehen oder ausgestaltet. Der Stützkörper weist zweckmäßigerweise eine flache Stirnseite auf. Die flache Stirnseite kann beispielsweise mit einer Außenkontur des Werkstücks fluchten, wenn der Stützkörper in die Verbindungsausnehmung eingesteckt ist und der Verankerungsbeschlag vollständig montiert ist.

Der Zuganker weist zweckmäßigerweise mindestens eine Drehmitnahmekontur, beispielsweise eine Sechskantkontur oder sonstige Mehrkantkontur, für ein Montagewerkzeug auf. Die Drehmitnahmekontur eignet sich beispielsweise für einen Inbusschlüssel. Beispielsweise kann die Drehmitnahmekontur eine Innenkontur sein. Bevorzugt umfasst die Drehmitnahmekontur eine Außenumfangskontur des Zugankers. Das Montagewerkzeug, beispielsweise ein Inbusschlüssel, eine Montagenuss, ein Montageschlüssel oder dergleichen, kann in Eingriff mit der Drehmitnahmekontur gebracht werden.

Bevorzugt ist, wie gesagt, dass die oder eine Drehmitnahmekontur an einem Außenumfang des Zugankers angeordnet ist. Weiterhin bevorzugt ist es, wenn die Drehmitnahmekontur im Bereich des Steckabschnittes angeordnet ist. Beispielsweise ist ein Innensechskant oder eine sonstige Drehmitnahmekontur an einer Stirnseite des Längsendes an dem der Steckabschnitt angeordnet ist oder vorgesehen ist, vorgesehen. Die Drehmitnahmekontur kann auch den Steckabschnitt vollständig bilden oder der Steckabschnitt vollständig als Drehmitnahmekontur an seinem Außenumfang ausgestaltet sein, abgesehen von den nachfolgend noch erläuterten Stellschrägen oder Spannschrägen oder Verstellschrägen. Die Drehmitnahmekontur kann beispielsweise zu einer zumindest partiell verdrehsicheren Anlage des Steckabschnittes in der Steckaufnahme des Widerlagerkörpers vorgesehen sein.

Ein vorteilhaftes Ausführungsbeispiel sieht vor, dass die mindestens eine Drehmitnahmekontur an einem Kopf oder einer Stirnseite, insbesondere stirnseitig an einem Kopf, des Zugankers vorgesehen ist.

An der Steckaufnahme des Widerlagerkörpers für den Zuganker ist vorteilhaft eine Betätigungsausnehmung für die mindestens eine Drehmitnahmekontur vorgesehen. Durch die Betätigungsausnehmung ist der Zuganker, vorzugsweise an seiner Stirnseite und/oder von seiner Stirnseite her, betätigbar, beispielsweise im Bereich der Drehmitnahmekontur, wenn er in der Steckaufnahme aufgenommen ist.

Die Steckaufnahme des Widerlagerkörpers für den Zuganker ist vorteilhaft als eine Durchtrittsöffnung ausgestaltet. Die Durchtrittsöffnung ermöglicht zum Beispiel eine Betätigung der oben erläuterten Drehmitnahmekontur.

Der Zuganker weist zweckmäßigerweise einen Schraubabschnitt, beispielsweise zum Einschrauben in einen Verankerungskörper, auf. Der Schraubabschnitt und der Steckabschnitt, der in die Steckaufnahme des Widerlagerkörpers einzustecken ist, sind an einander entgegengesetzten Längsendbereichen des Zugankers vorgesehen. Mithin ist also ein Längsende des Zugankers zum Einstecken in den Widerlagerkörper, das andere Längsende zur Verbindung mit einem weiteren Körper, beispielsweise einem Verankerungskörper, des Verankerungsbeschlages, vorgesehen. Der Schraubabschnitt kann aber auch zum Einschrauben in ein anderes Werkstück vorgesehen sein. Der Schraubabschnitt kann beispielsweise ein selbstschneidendes Gewinde aufweisen, welches unmittelbar in ein Werkstück, insbesondere ein Holz-Werkstück, einschraubbar ist. Bevorzugt ist eine Schrägflächenanordnung zwischen dem Zuganker um dem Klemmkörper zur Längsverstellung des Zugankers bezüglich des Widerlagerkörpers in Richtung der Längsachse des Zugankers vorgesehen. Die Schrägflächenanordnung kann beispielsweise die bereits erwähnte Klemmschräge, insbesondere den Klemmkonus, an dem Klemmkörper umfassen oder dadurch gebildet sein.

Die Schrägflächenanordnung umfasst zweckmäßigerweise mindestens eine schräg zur Längsachse des Zugankers verlaufende Stellschräge, die insbesondere am Zuganker selbst vorgesehen ist, aber auch am Klemmkörper vorgesehen sein kann. Es ist an dieser Stelle zu erwähnen, dass an beiden, nämlich dem Zuganker und dem Klemmkörper die entsprechenden Stellschrägen oder Schrägflächen vorgesehen sein können. Die mindestens eine Stellschräge kann mehrere, beispielsweise zwei oder drei, winkelig zueinander im Sinne einer Vertiefung oder eines Vorsprungs verlaufende Stellschrägen umfassen.

An dieser Stelle sei erwähnt, dass eine am Zuganker angeordnete Stellschräge länger als eine an dem Klemmkörper angeordnete Stellschräge sein kann.

Die Schrägflächenanordnung erstreckt sich zweckmäßigerweise quer zu der Längsachse des Zugankers mit einer Querbreite, die eine Ausrichtung des Zugankers bezüglich des Widerlagerkörpers im Bereich der Ausricht-Querbreite der Steckaufnahme ermöglicht. Mithin ist also eine Stellschräge nicht schmal entlang der Längsachse des Zugankers, sondern verhältnismäßig breit. Der Zuganker kann also innerhalb der Steckaufnahme ausgerichtet werden, wobei der Eingriff des Klemmkörpers in die Stellschräge des Zugankers immer erhalten bleibt.

Bevorzugt ist an dieser Stelle eine Anordnung, bei der eine Schrägfläche am Zuganker lediglich in einem Winkel zur Längsachse des Zugankers geneigt ist, nicht aber quer zur Längsachse des Zugankers. Es ist aber auch möglich, dass die Stellschräge oder Schrägflächenanordnung mindestens eine Art Mulde aufweist, die zweidimensional verlaufende Schrägflächen aufweist, beispielsweise eine konische Bohrung. Eine derartige Bohrung lässt sich leicht herstellen. Dennoch ermöglicht sie bei einer entsprechenden flachen Neigung quer zur Längsachse des Zugankers, dass der Zuganker innerhalb der Steckaufnahme im Bereich der Ausricht-Querbreite ausrichtbar bleibt.

Ein bevorzugtes Konzept sieht vor, dass der Zuganker durch den Klemmkörper in Richtung der Längsachse des Zugankers oder der Steckachse des Steckabschnitts bezüglich der Steckaufnahme formschlüssig in der Steckaufnahme fixierbar ist. Weiterhin ist es vorteilhaft, wenn der Zuganker durch den Klemmkörper bezüglich der Steckaufnahme quer zur Längsachse des Zugankers oder quer zu der Steckachse des Steckabschnitts bezüglich der Steckaufnahme kraftschlüssig fixierbar ist. Der Zuganker kann beispielsweise quer zu seiner Längsachse durch reibschlüssiger Anlage an der Verbindungsausnehmung zusätzlichen abgestützt sein.

Der Widerlagerkörper ist zweckmäßigerweise zur Verankerung des Verankerungsbeschlags in einem ersten Werkstück vorgesehen. Der Verankerungsbeschlag umfasst zusätzlich noch mindestens einen Haltekörper, beispielsweise den bereits erwähnten Verankerungskörper, in der Zuganker einschraubbar ist, zur Befestigung in einer Halteausnehmung eines zweiten Werkstücks. Der Haltekörper ist mit dem Zuganker verbunden, beispielsweise fest verbunden. Der Haltekörper kann aber auch anhand von Befestigungsmitteln lösbar mit dem Zuganker verbindbar sein. Die Befestigungsmittel umfassen beispielsweise Schraubmittel und/oder werden durch eine Schraubverbindung gebildet. Es ist weiterhin möglich, dass der Haltekörper eine Durchtrittsöffnung für zumindest einen Teilabschnitt des Zugankers aufweist. Somit kann der Zuganker, beispielsweise mit einem Schraubabschnitt, durch die Durchtrittsöffnung durchgesteckt werden und mit einer weiteren Komponente, beispielsweise einem weiteren Zuganker, verbunden werden.

Der Haltekörper hat zweckmäßigerweise eine Flachgestalt mit einander gegenüberliegenden Flachseiten und sich zwischen den Flachseiten erstreckenden, beispielsweise gerundeten, Schmalseiten zur zumindest abschnittsweise formschlüssigen Abstützung in der Halteausnehmung. Der Haltekörper weist zweckmäßigerweise eine Umhüllende einer Außenkontur auf, die der Umhüllenden der Außenkontur des mindestens einen Stützkörpers des bereits erläuterten Grund-Verankerungsbeschlags entspricht. An dieser Stelle sei erwähnt, dass der Verankerungsbeschlag zweckmäßigerweise solche Komponenten aufweist, die in kreisrunde Werkstück-Ausnehmungen einsteckbar sind und ansonsten, abgesehen von dem Zuganker, Körper aufweist, die die vorerwähnte Flachgestalt aufweisen. Die Außenumfangsgeometrien der Flachseiten aufweisenden Körper sind zweckmäßigerweise identisch, so dass mit einem einzigen Bohrwerkzeug oder einer einzigen Einstellung eines Bohrwerkzeugs / Fräswerkzeugs alle flachgestaltigen Ausnehmungen in dem Werkstück herstellbar sind.

Der Haltekörper kann aber auch mehrteilig, beispielsweise zweiteilig sein. Bevorzugt ist eine Anordnung, bei der der Haltekörper von zwei einander entgegengesetzten Seiten her in eine Halteausnehmung an einem Werkstück einsteckbar ist. An dem jeweiligen Haltekörper oder Haltekörperteil kann ein jeweiliger Zuganker gehalten, insbesondere lösbar gehalten, sein.

Der Haltekörper umfasst zweckmäßigerweise einen Klemmkörper zum Verklemmen in der Halteausnehmung des zweiten Werkstücks oder bildet einen derartigen Klemmkörper. Mithin kann also der Haltekörper mit festem Halt in der Halteausnehmung befestigt werden.

Der Haltekörper weist zweckmäßigerweise mindestens einen Klemmarm zum Verklemmen in der Halteausnehmung des zweiten Werkstücks auf. Besonders bevorzugt sind zwei Klemmarme oder ein Paar von Klemmarmen, die an einer entgegengesetzten Seite angeordnet sind und spreizfußartig in der Halteausnehmung zu Verklemmen sind. Der mindestens eine Klemmarm oder das Paar der Klemmarme ist zweckmäßigerweise durch den Zuganker selbst oder einen durch den Zuganker betätigbaren Keilkörper in eine den Haltekörper in der Halteausnehmung verklemmende Klemmstellung verstellbar. Der Zuganker ist zweckmäßigerweise durch eine Durchtrittsöffnung des Haltekörpers durchsteckbar und mit dem Klemmkörper verbindbar, beispielsweise verschraubbar. Wenn der Zuganker angeschraubt wird, beispielsweise anhand der bereits erwähnten Drehmitnahmekonturen, verstellt er den Keilkörper zwischen einen Grundkörper des Haltekörpers und dem Klemmarm oder den beiden Klemmarmen derart, dass der mindestens eine Klemmarm oder die Klemmarme sozusagen vom Grundkörper des Haltekörpers weg aufgespreizt werden, um den Haltekörper in der Halteausnehmung zu verklemmen.

Weiterhin vorteilhaft ist es, wenn der Zuganker einen ersten Zuganker und der Widerlagerkörper einen ersten Widerlagerkörper bildet und der Verankerungsbeschlag bei dieser Konfiguration einen zweiten Zuganker sowie einen zweiten Widerlagerkörper zur Anordnung in einem zweiten Werkstück aufweist. Der erste Zuganker und der zweite Zuganker sind an ihren von den jeweiligen Widerlagerkörper entfernten Längsendbereichen lösbar miteinander verbindbar, beispielsweise verschraubbar, verklemmbar oder in sonstiger Weise zu verbinden. Somit kann ein derartiger Verankerungsbeschlag dazu verwendet werden, zwei Werkstücke miteinander zu verbinden.

Ein bevorzugtes Konzept sieht vor, dass ein maximaler Außenumfang und/oder eine Umhüllende des Widerlagerkörpers um seine zum Einstecken in die Widerlagerausnehmung vorgesehene Steckachse etwa kreisrund ist. Der Widerlagerkörper muss nicht vollständig kreisrund sein, sondern nur in seiner Umhüllenden. Dann ist es nämlich möglich, dass der Widerlagerkörper in die Widerlagerausnehmung einsteckbar ist, wenn diese eine kreisrunde Innenkontur aufweist. Mithin handelt es sich also bei der Widerlagerausnehmung vorzugsweise um eine Bohrung, während die Verbindungsausnehmung zweckmäßigerweise eine Flachgestalt aufweist, d.h. eine geringere Höhe als Breite.

Nachfolgend werden Ausführungsbeispiele der Erfindung anhand der Zeichnung erläutert. Es zeigen:
- Figur 1: eine Explosionsdarstellung eines Verankerungsbeschlags, der
- Figur 2: im montierten Zustand dargestellt ist,
- Figur 3: den Verankerungsbeschlag gemäß Figuren 1, 2 im montierten Zustand, bei dem er zwei Werkstücke miteinander verbindet und wobei ein Ausbruch in dem einen Werkstück dargestellt ist,
- Figur 4: die Anordnung gemäß Figur 3, etwa entlang einer Schnittlinie A-A,
- Figur 5: die Anordnung gemäß Figur 3, etwa entlang einer Schnittlinie B-B,
- Figur 6: eine Explosionsdarstellung des Verbindungsbeschlags gemäß Figuren 1 und 2 mit einem alternativen Zuganker,
- Figur 7: eine Explosionsdarstellung eines weiteren Verbindungsbeschlags mit zwei Zugankern, einem zwischengeschalteten Haltekörper sowie zwei Widerlagerkörpern, und
- Figur 8: die Anordnung gemäß Figur 7, jedoch ohne Haltekörper.

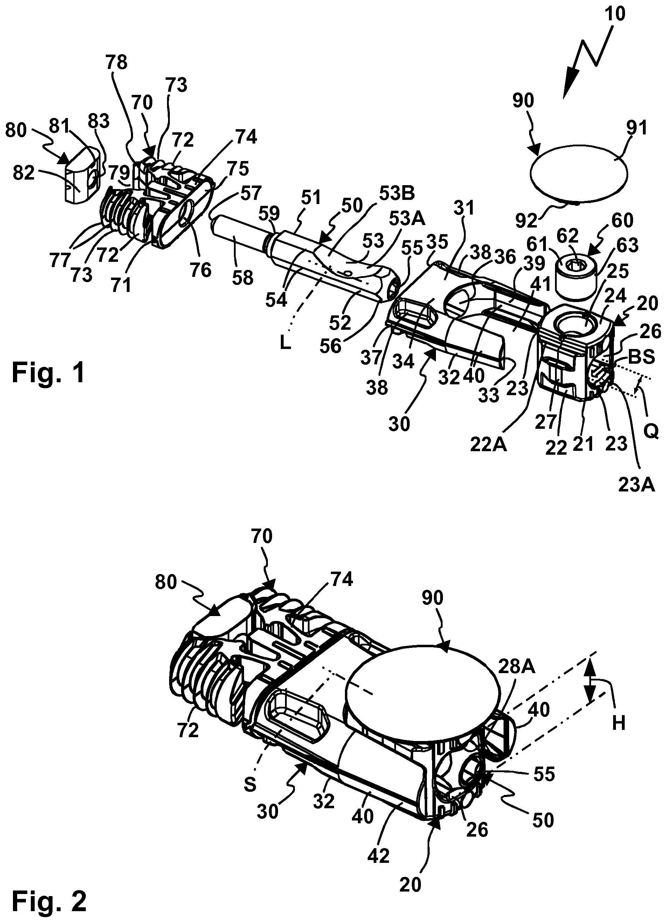

Ein in den Figuren 1 und 2 dargestellter Verankerungsbeschlag 10 ist in einem Werkstück W2 verankerbar und dient zur Verbindung des Werkstücks W2 mit einem Werkstück W1. Die Werkstücke W1 und W2 sind beispielsweise Holzwerkstücke, Holzplatten oder dergleichen. Selbstverständlich eignet sich der Verankerungsbeschlag auch für Werkstücke aus anderen Werkstoffen, beispielsweise Kunststoff oder Metall. Im miteinander verbundenen Zustand liegen die Werkstücke W1 und W2 beispielsweise mit ihren Werkstück-Stirnseiten WS1 und WS2 aneinander an.

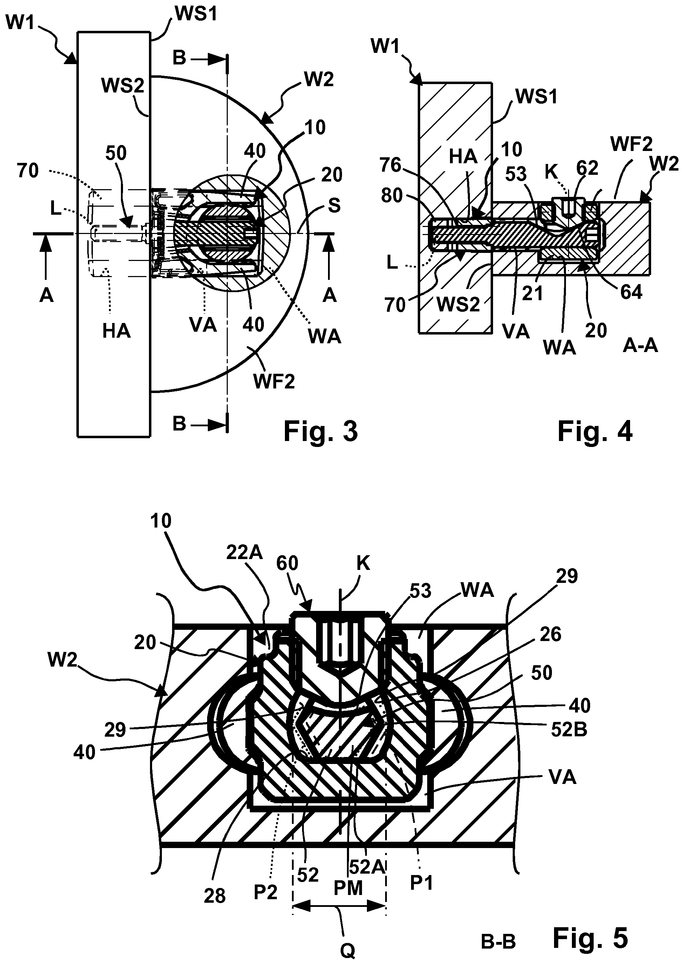

Im Werkstück W1 sind eine Halteausnehmung HA und im Werkstück W2 eine Verbindungsausnehmung VA angeordnet, die im montierten Zustand des Verankerungsbeschlags 10 bzw. aneinander montierten Zustand der Werkstücke W1 und W2 miteinander fluchten, siehe zum Beispiel Figuren 3 und 4. Quer zu den beiden Ausnehmungen VA und HA ist eine Widerlagerausnehmung WA im Werkstück W2 vorgesehen, beispielsweise rechtwinkelig quer. Die Widerlagerausnehmung WA erstreckt sich von einer Werkstückflachseite WF2 des Werkstücks W2 in dessen Kernbereich hinein und kommuniziert mit der Verbindungsausnehmung VA, die rechtwinklig oder jedenfalls quer zu der Widerlagerausnehmung WA verläuft.

Zur Verankerung des Verankerungsbeschlags 10 im Werkstück W2 ist ein Widerlagerkörper 20 vorgesehen, der beispielsweise in der Art einer Haltenuss oder dergleichen ausgestaltet ist. Der Widerlagerkörper 20 weist an einander entgegengesetzten Stirnseiten 21 und 24 eine Flachgestalt auf, während sich zwischen den Stirnseiten 21, 24 erstreckende vordere und hintere Frontseiten 23 eine Rundung umfassen. Zwischen den Frontseiten 23 erstrecken sich Längsseiten 22, die eine im Wesentlichen abgeflachte Gestalt aufweisen, also gegenüber einer runden oder kreisrunden Umhüllenden des Widerlagerkörpers 20 in einer Sicht von einer der Stirnseiten 21 oder 24 auf den Widerlagerkörper 20 zurücktreten. Allerdings sind an den Längsseiten 22 Führungsvorsprünge 27 vorgesehen, die eine gerundete Außenumfangskontur aufweisen. In der Ebene der Führungsvorsprünge 27 hat der Widerlagerkörper 20 eine etwa kreisrunde Außenumfangskontur abgesehen von Stützrippen 23A, die zur Abstützung am Innenumfang der Widerlagerausnehmung WA dienen.

Der Widerlagerkörper 20 kann also aufgrund seiner etwa kreisrunden Außenumfangskontur in Bezug auf eine Steckachse SW, entlang derer er in die Widerlagerausnehmung WA einsteckbar ist, in die ebenfalls kreisrunde Widerlagerausnehmung WA eingesteckt werden. Eine Umhüllende des Widerlagerkörpers 20 bezüglich der Steckachse SW ist etwa kreisrund.

Denkbar wäre nun eine Konfiguration, bei der der Widerlagerkörper 20 sich unmittelbar und/oder ausschließlich an der Widerlageraufnahme WA abstützt, was aber vorliegend nicht der Fall ist.

Vielmehr ist der Widerlagerkörper 20 zumindest zusätzlich anhand eines Stützkörpers 30 abgestützt, der zum Eingriff bzw. zum Einstecken in die Verbindungsausnehmung VA vorgesehen und ausgestaltet ist. Insbesondere hat der Stützkörper 30 eine Flachgestalt mit Schmalseiten 32 sowie sich zwischen den Schmalseiten 32 erstreckenden Flachseiten 34.

Der Stützkörper 30 weist einen Grundkörper 31 auf, von dem Arme 40 abstehen. Im Bereich der Arme 40 ist sozusagen die Flachseite 34 ausgespart bzw. unterbrochen, weil sich nämlich dort eine Widerlagerkörper-Aufnahme 41 für den Widerlagerkörper 20 befindet.

Die Schmalseiten 32 des Stützkörpers 30 sind außenseitig gerundet, d.h. sie verlaufen konvex bezüglich der Flachseiten 34. Eine derartige Rundung kann beispielsweise kontinuierlich sein, wie insbesondere im Bereich von Einführschrägen 42 an den Armen 40. Es ist aber auch möglich, dass die Rundungen nicht durchgehend sind, so dass beispielsweise Vertiefungen 38 im Bereich der Schmalseiten 32 am Grundkörper 31 vorgesehen sind. Allerdings ist die Außenumfangskontur der Schmalseiten 32 auch im Bereich des Grundkörpers 31 im Wesentlichen rund.

Stirnseiten oder vordere Frontseiten 33 der Arme 40 erstrecken sich bis zu der Widerlagerausnehmung WA, wo im montierten Zustand des Verankerungsbeschlags 10 der Widerlagerkörper 20 angeordnet ist. Der Stützkörper 30 kann in die Verbindungsausnehmung VA eingesteckt werden, wenn der Widerlagerkörper 20 bereits in der Widerlagerausnehmung WA angeordnet ist. Im Sinne einer Erleichterung der Einsteckbewegung wirkt es, wenn die Führungsvorsprünge 27 des Widerlagerkörpers 20 in eine Linearführung 39 des Stützkörpers 30 eingreifen. Die Linearführung 39 ist beispielsweise durch Führungsnuten oder Führungsvertiefungen an den Armen 40 gebildet, in die die Führungsvorsprünge oder Führungskonturen 27 des Widerlagerkörpers 20 eingreifen können.

Für einen verbesserten Halt des Stützkörpers 30 in der Verbindungsausnehmung VA sorgen Stützrippen 37, die in einer zu den Flachseiten 34 etwa parallelen Ebene vor die Schmalseiten 32 vorstehen und sich sozusagen in das Material des Werkstücks W2 eingraben können.

Die Arme 40 weisen an ihren von der Widerlagerkörper-Aufnahme 41 abgewandten Seiten die Einführschrägen 42 auf, d.h. die Arme 40 sind zu ihren freien Endbereichen oder Stirnseiten 33 hin schlanker und/oder sich verjüngend. Eine Außenumfangskontur des Stützkörpers 30 ist im Bereich der Arme 40 kleiner als im Bereich des Grundkörpers 31. Somit kann der Stützkörper 30 leichter in die Verbindungsausnehmung VA eingesteckt werden, weil er nämlich im Bereich der Stirnseiten 33 schmaler als im Bereich der Stirnseite 34 ist.

Eine von dem Widerlagerkörper 20 oder der Widerlagerkörper-Aufnahme 41 abgewandte Stirnseite 35 des Stützkörpers 30 fluchtet zweckmäßigerweise im am Werkstück W2 montierten Zustand des Stützkörpers 30 mit der Werkstück-Stirnseite WS2 oder tritt hinter die Werkstück-Stirnseite WS2 zurück, ist also vertieft in der Verbindungsausnehmung VA aufgenommen.

Wenn nun der Widerlagerkörper 20 in der Widerlagerausnehmung WA angeordnet und der Stützkörper 30 in der Verbindungsausnehmung VA angeordnet sind, kann der Zuganker 50 durch die Durchtrittsöffnung 36 des Stützkörpers 30 hindurch bis zu einer Steckaufnahme 26 des Widerlagerkörpers 20 entlang einer Steckachse S eingesteckt werden und anhand eines Klemmkörpers 60 in der Steckaufnahme 26 verklemmt werden.

Der Klemmkörper 60 ist in einer Klemmkörper-Aufnahme 25 des Widerlagerkörpers 20 aufgenommen. An einer Stirnseite 61 des Klemmkörpers 60 ist eine Drehmitnahmekontur 62, beispielsweise für einen Inbus-Schlüssel, vorgesehen. Anhand der Drehmitnahmekontur 62 ist der Klemmkörper 60 drehbetätigbar, so dass der in die Klemmkörper-Aufnahme 25 eingeschraubt oder aus dieser ausgeschraubt werden kann. An einem Außenumfang 63 des Klemmkörpers 60, der im Wesentlichen als eine Schraube oder Klemmschraube ausgestaltet ist, befinden sich Schraubkonturen oder Schraubgewinde, die in Eingriff mit Schraubkonturen am Innenumfang der Klemmkörper-Aufnahme 25 sind. An einer der Stirnseite 61 entgegengesetzten Stirnseite des Klemmkörpers 60, nämlich an einer in die Steckaufnahme 26 hinein vorstehenden Stirnseite ist eine Klemmschräge 64, insbesondere ein Konus vorgesehen, mit dem der Zuganker 50 in der Steckaufnahme 26 verklemmbar ist.

Der Zuganker 50 weist einen Zugankerkörper 51 auf. Der Zuganker 50 erstreckt sich entlang einer Längsachse L oder weist eine Längsachse L auf. An einem Längsendbereich des Zugankers 50 ist ein Steckabschnitt 52 zum Einstecken in die Steckaufnahme 26 des Widerlagerkörpers 20 vorgesehen. Am anderen Längsendbereich ist ein Schraubabschnitt 58 vorgesehen. Zwischen dem Schraubabschnitt 58 und dem Steckabschnitt 52 ist eine Stufe 59 vorhanden.

Am Zuganker 50 sind Drehmitnahmekonturen 54, 55 vorgesehen, mit denen der Zuganker 50 um eine Drehachse und/oder seine Längsachse L herum drehbetätigbar ist. Die Drehmitnahmekontur 54 ist an einem Außenumfang des Zugankers 50, insbesondere im Steckabschnitt 52 vorgesehen.

Die Drehmitnahmekontur 55 ist sozusagen eine Innenkontur, die nämlich am Längsende des Steckabschnittes 52 vorgesehen ist.

Zwischen Längsenden 56, 57 des Zugankers 50, jedoch am Steckabschnitt 52, ist eine Schrägflächenanordnung 53 für den Klemmkörper 60 vorgesehen. Die Schrägflächenanordnung 53 umfasst Stellschrägen 53A, 53B, die in der Art einer Mulde oder einer V-förmigen Konfiguration aufeinander zu verlaufen. Zwischen den Stellschrägen 53 ist sozusagen eine Vertiefung oder ein tiefster Punkt vorgesehen.

Wenn also der Klemmkörper 60 entlang der Klemmachse K geschraubt wird, so dass er in Eingriff mit dem Zuganker 50 kommt und eine Klemmstellung einnimmt, gleitet die Klemmschräge 64 an einer der Stellschrägen 53 entlang, so dass der Zuganker 50 entlang seiner Längsachse L oder der Steckachse S axial verstellt wird, nämlich zu dem Widerlagerkörper 20 hin. Diese Spannbewegung dient dazu, das Werkstück W2 mit dem Werkstück W1 zu verspannen, wie nachfolgend noch deutlicher wird:
Der Zuganker 50 ist nämlich mit dem Haltekörper 70 lösbar verbindbar. Der Haltekörper 70 ist zum Einstecken in die Halteaufnahme HA des Werkstücks W1 vorgesehen. Der Haltekörper 70 weist einen Grundkörper 71 auf, von dem Klemmarme 73 gabelartig abstehen. Zwischen den Klemmarmen 73 ist eine Betätigungsausnehmung 79 vorgesehen, in die ein Keilkörper 80 eingreift. Der Zuganker 50 ist mit dem Keilkörper 80 verbindbar, nämlich verschraubbar. Der Schraubabschnitt 58 ist beispielsweise in eine Schraubaufnahme 83 an einer Stirnseite 81 des Keilkörpers 80 einschraubbar. Seitlich neben der Schraubaufnahme 83 befinden sich Betätigungsschrägen 82, die an den Schrägflächen 78 oder Innenseiten der Betätigungsausnehmung 79 entlang gleiten können, so dass sie die Klemmarme 73 nach außen aufspreizen, wodurch diese in klemmende Anlage mit den Schmalseiten oder schmalen Innenseiten der Halteausnehmung HA gelangen.

An den Klemmarmen sind vorteilhaft noch Rippen 77, insbesondere elastische Rippen, vorgesehen, die diese formschlüssige Klemmanlage der Klemmarme 73 verbessern.

Der Haltekörper 70 weist grundsätzlich eine Flachgestalt auf, so dass er wie der Stützkörper 30 einander entgegengesetzte Schmalseiten 72 aufweist, die insbesondere an den Außenseiten der Klemmarme 73 vorhanden sind. Zwischen den Schmalseiten 72 erstrecken sich Flachseiten 74, insbesondere im Bereich des Grundkörpers 71. Der Haltekörper 30 weist weiterhin eine Durchtrittsöffnung 76 auf, die sich von einer dem Zuganker 50 oder dem Stützkörper 30 zugewandten Stirnseite 75, die vorliegend als Flachseite ausgestaltet ist, zu der Betätigungsausnehmung 79 zwischen den Klemmarmen 73 erstreckt. Durch die Durchtrittsöffnung 76 hindurch kann also der Schraubabschnitt 58 durchgesteckt und in den Keilkörper 80 eingeschraubt werden. Dadurch spreizen sich dann die Klemmarme 73 auf.

In diesem Zusammenhang wird auch die Funktion der Drehmitnahmekonturen 54 und/oder 55 deutlich. Der Bediener kann nämlich mit einem Montagewerkzeug, beispielsweise einem Inbus-Schlüssel, einem Maulschlüssel, einem Ringschlüssel oder dergleichen die Drehmitnahmekonturen 54, 55 betätigen, um den Zuganker 50 sozusagen in den Keilkörper 80 einzuschrauben und somit den Haltekörper 70 in der Halteausnehmung HA zu verklemmen.

Man erkennt, dass möglicherweise dadurch die Längsachse L des Zugankers 50 nicht optimal mit einer Mittelachse (bezogen auf die Steckachse S) der Steckaufnahme 26 des Widerlagerkörpers 20 fluchtet. Das ist aber insoweit unproblematisch, als die Steckaufnahme 26 nicht nur eine Querbreite aufweist, die ein Einstecken des Steckabschnittes 52 des Zugankers 50 erlaubt, sondern auch eine Quer-Korrektur.

Die Steckaufnahme 26 hat nämlich eine Ausricht-Querbreite Q, die größer ist ein Bewegungsspiel, welches an sich notwendig ist, um den Steckabschnitt 52 in die Steckaufnahme 26 einzustecken. Erkennbar ist dies insbesondere in der Darstellung gemäß Figur 5. Innerhalb der Steckaufnahme 26 kann der Steckvorsprung 52 des Zugankers 50 nicht nur in einer mittleren Position PM, sondern in zu der mittleren Position PM ausgelenkten seitlichen Positionen P1 oder P2 sowie vorteilhaft zahlreichen dazwischen liegenden Positionen positioniert werden.

Der Steckabschnitt 52 findet in der Steckaufnahme 26 dem Klemmkörper 60 gegenüberliegend eine optimale Auflage vor. Der Steckabschnitt 52 liegt mit einer planen Auflagefläche 52A, die beispielsweise von einer der Außenseiten des Sechskant der polygonalen Drehmitnahmekontur 54 bereitgestellt wird, auf einer Bodenfläche 28 der Steckaufnahme 26 auf. Die Bodenfläche 28 liegt dem Klemmkörper 60 gegenüber und stützt somit den Zuganker 50 gegenüber dem Klemmkörper 60 optimal ab. Man erkennt weiterhin, dass die Drehmitnahmekontur 54 im Prinzip einer Querverstellung bzw. Justierung des Zugankers 50 in der innerhalb der Ausricht-Querbreite Q hinderlich ist, weil nämlich Außenkanten der Drehmitnahmekontur 54 sozusagen seitlich vor die Auflagefläche 52A vorstehen (siehe Figur 5). Um dieser Problematik abzuhelfen erweitert sich die Steckaufnahme 26 von der Bodenfläche 28 weg nach außen, so dass die Ausricht-Querbreite Q auch im Bereich der von der Auflagefläche 52A vorhandenen Vorsprünge 52B, nämlich den Kanten der Drehmitnahmekontur 54 gegeben ist.

Die Steckaufnahme 26 weist weiterhin eine Querhöhe H quer zur Ausricht-Querbreite Q auf. Die Querhöhe H ist kleiner als die Ausricht-Querbreite Q. Mithin hat also die Steckaufnahme 26 eine Flachgestalt. Die Querhöhe H ist die lichte Weite der Steckaufnahme 26 zwischen der Bodenfläche 28 und mindestens einer der Bodenfläche 28 gegenüberliegenden Stützfläche 28A. Die mindestens eine Stützflächen 28A ist zweckmäßigerweise eine Planfläche. Die mindestens eine Stützfläche 28A verläuft zweckmäßigerweise parallel zur Bodenfläche 28. Im Grunde sind zwei Stützflächen 28A vorhanden, zwischen denen der Klemmkörper 60 angeordnet ist.

Zur optisch ansprechenden Abdeckung des Verankerungsbeschlags 10, insbesondere des Widerlagerkörpers 20, ist eine Abdeckung 90 vorgesehen. Die Abdeckung 90 umfasst beispielsweise einen Plattenkörper 91, welcher im Wesentlichen mit der Werkstück-Flachseite WF2 fluchtet, wenn die Abdeckung 90 am Verankerungsbeschlag 10 angebracht ist. Der Plattenkörper 91 weist Haltevorsprünge 92 auf, die in Eingriff mit dem Widerlagerkörper 20 bringbar sind, beispielsweise im Bereich von Aufnahmen 22A. Die Aufnahmen 22A sind beispielsweise Freisparungen oder sonstige Vertiefungen, die an den Längsseiten 22 bzw. im Bereich zwischen den Längsseiten 22 und der Stirnseite 21 vorgesehen sind. Selbstverständlich sind auch andere Verankerungen denkbar, beispielsweise eine in der Darstellung nicht dargestellte Variante mit einem Haltevorsprung, welcher in die Drehmitnahmekontur 62 des Klemmkörpers 60 eingreifen kann, beispielsweise in der Art eines Steckvorsprunges.

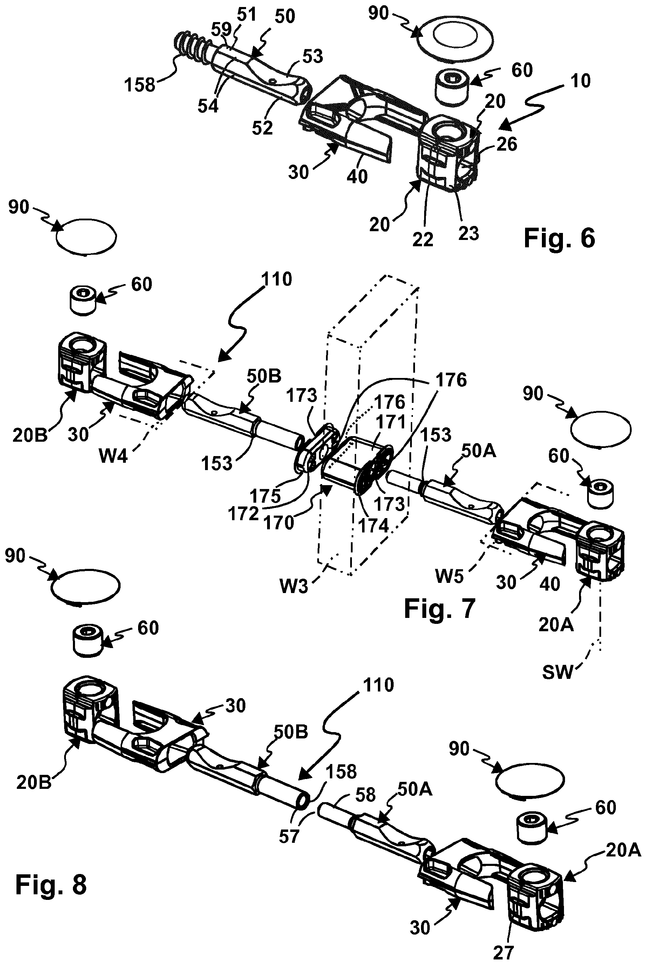

Varianten des Verankerungsbeschlages 10 sind ohne weiteres möglich und beispielsweise in Figur 6 angedeutet. Der dort dargestellte Zuganker 50 weist beispielsweise ein selbstschneidendes Gewinde 158 auf, mit welchem er direkt in ein Werkstück einschraubbar ist, beispielsweise in ein Holz-Werkstück.

Ein Verbindungsbeschlag 110 gemäß Figuren 7 und 8 ist in unterschiedlichen Weisen montierbar. Gleiche oder gleichartige Komponenten sind mit denselben Bezugsziffern versehen und werden nicht näher erläutert. Der Verankerungsbeschlag 110 weist beispielsweise dem Widerlagerkörper 20 entsprechende Widerlagerkörper 20A, 20B auf, welche in nicht näher bezeichnete Widerlagerausnehmungen von Werkstücken W4 und W5 anzuordnen sind. Die Werkstücke W4 und W5 weisen weiterhin Verbindungsausnehmungen auf, in die jeweils ein Stützkörper 30 einzustecken ist, der in Eingriff mit dem jeweiligen Widerlagerkörper 20A, 20B zu bringen ist.

Mit den Widerlagerkörpern 20A, 20B sind Zuganker 50A, 50B in Klemmverbindung bringbar, die prinzipiell dem Zuganker 50 ähneln. Allerdings sind an den Zugankern 50A, 50B im Bereich der Längsenden 57 Schraubmitteln zum Verschrauben der Zuganker 50A, 50B miteinander vorgesehen. Die Schraubmittel umfassen beispielsweise den bereits erwähnten Schraubabschnitt 58, der zum Einschrauben in eine Schraubaufnahme 158 des anderen Zugankers 50B geeignet ist. Diese Verschraubung kann unmittelbar geschehen, wie in Figur 8 angedeutet.

Es ist aber auch möglich, dass zwischen die Werkstücke W4 und W5 sandwichartig ein weiteres Werkstück W3 angeordnet werden kann, beispielsweise eine Seitenwand eines Möbels. Die Werkstücke W4 und W5 sind in diesem Fall beispielsweise Fachböden, Oberböden oder Unterböden eines Schrankes.

In dem Werkstück W3 ist eine Halterausnehmung in der Art der Halteausnehmung HA vorgesehen, in die ein Haltekörper 170 einsteckbar ist. Der Haltekörper 170 weist einen Teil-Haltekörper 171 und einen anderen Teil-Haltekörper 172 auf, die ineinander einsteckbar sind. Die Teil-Haltekörper 171, 172 werden von einander entgegengesetzten Seiten her in die Halteausnehmung des Werkstückes W3 eingesteckt. Dabei kann ein Haltevorsprung 175 des Teil-Haltekörpers 171 in eine Steckaufnahme 176 des anderen Teil-Haltekörpers 172 eingesteckt werden.

An den den Außenseiten des Werkstücks W3 zugeordneten Stirnseiten haben die Teil-Haltekörper 171, 172 beispielsweise Vorsprünge 174, um die Einsteckbewegung in die Halteaufnahme des Werkstücks W3 zu begrenzen.

Die Zuganker 50A, 50B können an den Teil-Haltekörpern 171, 172 vormontiert werden. Beispielsweise sind im Bereich der Stufe 59 eines jeweiligen Zugankers 50A, 50B Rastkonturen 153, beispielsweise ein Rastvorsprung, eine Rastaufnahme oder dergleichen, vorgesehen sein, die mit Gegen-Rastkonturen 173 an den Teil-Haltekörpern 171, 172 in Rasteingriff bringbar sind.

Der Haltekörper 170 weist eine Durchtrittsöffnung 176 auf, durch die die Zuganker 50A, 50B, nämlich insbesondere deren Schraubabschnitte 158, 58 durchsteckbar sind. An jedem der Teil-Haltekörper 171, 172 ist jeweils ein Teilbereich der Durchtrittsöffnung 176 vorgesehen.

## Patentansprüche

1. Verankerungsbeschlag zur Verankerung in einem Werkstück (W2), wobei der Verankerungsbeschlag (10) einen Zuganker (50) zur Anordnung in einer Verbindungsausnehmung (VA) des Werkstücks (W2) und einen Widerlagerkörper (20) zur Anordnung in einer mit der Verbindungsausnehmung (VA) kommunizierenden Widerlagerausnehmung (WA) des Werkstücks (W2) aufweist, wobei der Widerlagerkörper (20) eine Steckaufnahme (26) zum Einstecken eines Steckabschnitts (52) des Zugankers (50) entlang einer Steckachse (S) und eine Stützflächenanordnung zur Abstützung an der Widerlagerausnehmung (WA) des Werkstücks (W2) aufweist, wobei sich mindestens eine Stützfläche der Stützflächenanordnung, insbesondere etwa rechtwinkelig, quer zu einer Längsachse (L) des in die Steckaufnahme (26) eingesteckten Zugankers (50) erstreckt, sodass der Zuganker (50) bezüglich seiner Längsachse (L) an der Widerlagerausnehmung (WA) abgestützt ist, wobei der Verankerungsbeschlag (10) einen Klemmkörper (60) zum Verklemmen des Steckabschnitts (52) des Zugankers (50) in der Steckaufnahme (26) aufweist, und wobei mindestens ein Stützkörper (30) des Verankerungsbeschlags (10) eine Flachgestalt mit einander gegenüberliegenden Flachseiten und sich zwischen den Flachseiten erstreckenden, insbesondere gerundeten, Schmalseiten zur zumindest abschnittsweise formschlüssigen Abstützung in der Verbindungsausnehmung (VA) oder der Widerlagerausnehmung (WA) des Werkstücks (W2) aufweist, wobei die Steckaufnahme (26) quer zur Steckachse (S) eine zum Ausrichten des Zugankers (50) bezüglich des Widerlagerkörpers (20) geeignete Ausricht-Querbreite (Q) aufweist, die größer als ein zum Einstecken des Zugankers (50) in die Steckaufnahme (26) notwendiges Bewegungsspiel (BS) ist, und **dadurch gekennzeichnet,**
**dass** der mindestens eine Stützkörper (30) eine Widerlagerkörper-Aufnahme (41) für den Widerlagerkörper (20) aufweist, in die der Widerlagerkörper (20) im montierten Zustand des Verankerungsbeschlags eingreift.

2. Verankerungsbeschlag (10) nach Anspruch 1, **dadurch gekennzeichnet, dass** der Klemmkörper (60) bezüglich des Widerlagerkörpers (20) entlang einer, zu der Steckachse (S) insbesondere rechtwinkeligen, Klemmachse (K) verstellbar ist, wobei sich die Ausricht-Querbreite (Q) quer zu der Klemmachse (K) erstreckt, und/oder dass die Ausricht-Querbreite (Q) mindestens 5 %, vorzugsweise etwa 10 %, weiter bevorzugt etwa 20 % oder 30 %, größer als eine Querbreite des Steckabschnitts (52) des Zugankers (50) ist.

3. Verankerungsbeschlag nach einem der vorhergehenden Ansprüche, **dadurch gekennzeichnet, dass** die Steckaufnahme (26) eine zu der Ausricht-Querbreite (Q) und zur Steckachse (S) jeweils winkelige, insbesondere rechtwinkelige, Querhöhe (H) aufweist, deren Abmessung ausreicht, um den Zuganker (50) zu in die Steckaufnahme (26) einzustecken, wobei die Querhöhe (H) im Verhältnis zu einer Höhe des Steckabschnitts (52) kleiner als die Ausricht-Querbreite (Q) im Verhältnis zu einer Breite des Steckabschnitts (52) ist, und/oder dass der Klemmkörper (60) mindestens eine Klemmschräge (64), insbesondere einen Klemmkonus, an seiner dem Steckabschnitt (52) des Zugankers (50) zugewandten Seite, insbesondere Stirnseite, aufweist und/oder dass der Klemmkörper (60) eine Klemmschraube umfasst oder durch eine Klemmschraube gebildet ist und/oder einen Schraubabschnitt (58) zum Einschrauben in den Widerlagerkörper (20) aufweist.

4. Verankerungsbeschlag nach einem der vorhergehenden Ansprüche, **dadurch gekennzeichnet, dass** der Klemmkörper (60) einer Bodenfläche (28) der Steckaufnahme (26) gegenüber liegt und/oder dass die Steckaufnahme (26) eine zur Auflage des Steckabschnitts (52) des Zugankers (50) vorgesehene Bodenfläche (28) aufweist.

5. Verankerungsbeschlag nach Anspruch 4, **dadurch gekennzeichnet, dass** die Bodenfläche (28) und/oder eine Auflagefläche (52A) des Steckabschnitts (52) des Zugankers (50) zur Auflage auf der Bodenfläche (28) eine Planfläche oder ebene Fläche ist und/oder dass die Steckaufnahme (26) zur Bereitstellung der Ausricht-Querbreite (Q) in einem Bereich zwischen dem Klemmkörper (60) und der Bodenfläche (28) breiter als die Bodenfläche (28) ist und/oder dass die Steckaufnahme (26) eine der Bodenfläche (28) gegenüberliegende, insbesondere als Planfläche ausgestaltete, Stützfläche aufweist und/oder dass die Steckaufnahme (26) von der Bodenfläche (28) nach schräg außen, insbesondere gekrümmt, verlaufende Seitenwandflächen (29) aufweist.

6. Verankerungsbeschlag nach einem der vorhergehenden Ansprüche, **dadurch gekennzeichnet, dass** der Steckabschnitt (52) des Zugankers (50) eine Auflagefläche (52A) zur Auflage auf einer Bodenfläche (28) der Steckaufnahme (26) aufweist und mindestens einen sich in einer zu der Auflagefläche (52A) parallelen Ebene vorstehenden Vorsprung (52B) aufweist, der vor die Auflagefläche (52A) in Richtung der Ausricht-Querbreite (Q) vorsteht, und/oder dass die Stützflächenanordnung des Widerlagerkörpers (20) mindestens zwei Stützflächen aufweist, die an einander entgegengesetzten Seiten vorgesehen sind und zur Abstützung quer, insbesondere etwa rechtwinkelig quer, zu der Längsachse (L) des Zugankers (50) an der Widerlagerausnehmung (WA) vorgesehen sind, und/oder dass die Stützflächenanordnung des Widerlagerkörpers (20) mindestens eine Stützrippe (23A) und/oder eine Rippenstruktur zum Eingreifen in das Werkstück (W2) im Bereich der Widerlagerausnehmung (WA) aufweist.

7. Verankerungsbeschlag nach einem der vorhergehenden Ansprüche, **dadurch gekennzeichnet, dass** an der Widerlagerkörper-Aufnahme (41) und/oder dem Widerlagerkörper (20) Verdrehsicherungskonturen zum verdrehsicheren Aufnehmen des Widerlagerkörpers (20) in der Widerlagerkörper-Aufnahme (41) vorhanden sind.

8. Verankerungsbeschlag nach einem der vorhergehenden Ansprüche, **dadurch gekennzeichnet, dass** die Widerlagerkörper-Aufnahme (41) an mindestens einer Flachseite (34) angeordnet ist oder sich zwischen den Flachseiten (34) des Stützkörpers (30) erstreckt und/oder dass der Widerlagerkörper (20) an mindestens einer Seite, vorzugsweise an einander entgegengesetzten Seiten, im an dem Stützkörper (30) montierten Zustand vor den Stützkörper (30) vorsteht und/oder dass die Widerlagerkörper-Aufnahme (41) zwischen gabelförmig vorstehenden Armen (40) des Stützkörpers (30) vorgesehen ist, wobei vorteilhaft vorgesehen ist, dass an mindestens einem Arm (40), vorteilhaft an beiden Armen (40), des Stützkörpers (30) eine Linearführung (39), insbesondere eine Führungsnut oder ein Führungsvorsprung, zum Einführen des Widerlagerkörpers (20) in die Widerlagerkörper-Aufnahme (41) vorgesehen ist, wobei der Widerlagerkörper (20) zu der Linearführung (39) passende Führungskonturen (27) aufweist.

9. Verankerungsbeschlag nach einem der vorhergehenden Ansprüche, **dadurch gekennzeichnet, dass** der Stützkörper (30) eine Durchtrittsöffnung für den Zuganker (50) aufweist, wobei die Durchtrittsöffnung zumindest im Bereich des Widerlagerkörpers (20) eine ein Ausrichten des Zugankers (50) in der Steckaufnahme (26) ermöglichende Querbreite aufweist, die vorzugsweise zumindest so groß oder größer wie die Ausricht-Querbreite (Q) der Steckaufnahme (26) des Widerlagerkörpers (20) ist, und/oder dass der mindestens eine Stützkörper (30) einen Stützkörper (30) zur Anordnung in der Verbindungsausnehmung (VA) vorgesehen oder ausgestaltet ist.

10. Verankerungsbeschlag nach einem der vorhergehenden Ansprüche, **dadurch gekennzeichnet, dass** der Zuganker (50) mindestens eine Drehmitnahmekontur (54, 55), insbesondere eine Sechskant-Kontur, für ein Montagewerkzeug, insbesondere einen Inbus-Schlüssel und/oder eine Montagenuss oder einen Montageschlüssel, aufweist, wobei vorteilhaft vorgesehen ist, dass die Drehmitnahmekontur (54, 55) an einem Außenumfang des Zugankers (50), insbesondere im Bereich des Steckabschnitts (52), angeordnet ist.

11. Verankerungsbeschlag nach einem der vorhergehenden Ansprüche, **dadurch gekennzeichnet, dass** der Zuganker (50) einen Schraubabschnitt (58), insbesondere zum Einschrauben in einen Verankerungskörper, aufweist, wobei der Schraubabschnitt (58) und der Steckabschnitt (52) an einander entgegengesetzten Längsendbereichen des Zugankers (50) angeordnet sind.

12. Verankerungsbeschlag nach einem der vorhergehenden Ansprüche, **dadurch gekennzeichnet, dass** er eine Schrägflächenanordnung (53) zwischen dem Zuganker (50) und dem Klemmkörper (60) zur Längsverstellung des Zugankers (50) bezüglich des Widerlagerkörpers (20) in Richtung der Längsachse (L) des Zugankers (50) aufweist, wobei vorteilhaft vorgesehen ist, dass die Schrägflächenanordnung (53) mindestens eine schräg zur Längsachse (L) des Zugankers (50) verlaufende Stellschräge (53A, 53B), insbesondere winkelig aufeinander zu im Sinne einer Vertiefung oder eines Vorsprungs verlaufende Stellschrägen (53A, 53B), an dem Zuganker (50) und/oder dem Klemmkörper (60) umfasst und/oder dass sich die Schrägflächenanordnung (53) quer zu der Längsachse (L) des Zugankers (50) mit einer Querbreite erstreckt, die eine Ausrichtung des Zugankers (50) bezüglich des Widerlagerkörpers (20) im Bereich der Ausricht-Querbreite (Q) der Steckaufnahme (26) ermöglicht.

13. Verankerungsbeschlag nach einem der vorhergehenden Ansprüche, **dadurch gekennzeichnet, dass** der Widerlagerkörper (20) zur Verankerung des Verankerungsbeschlags in einem ersten Werkstück (W2) vorgesehen ist und der Verankerungsbeschlag (10) mindestens einen Haltekörper (70) zur Befestigung in einer Halteausnehmung (HA) eines zweiten Werkstücks (W1) aufweist, wobei der Haltekörper (70) mit dem Zuganker (50) verbunden ist und/oder an dem Zuganker (50) und dem Haltekörper (70) Befestigungsmittel, insbesondere Schraubmittel, zur lösbaren Befestigung des Zugankers (50) an dem Haltekörper (70) vorhanden sind und/oder der Haltekörper (70) eine Durchtrittsöffnung (76) für zumindest einen Teilabschnitt des Zugankers (50) aufweist, wobei vorteilhaft vorgesehen ist, dass der Haltekörper (70) eine Flachgestalt mit einander gegenüberliegenden Flachseiten (74) und sich zwischen den Flachseiten (74) erstreckenden, insbesondere gerundeten, Schmalseiten (72) zur zumindest abschnittsweise formschlüssigen Abstützung in der Halteausnehmung (HA) aufweist und/oder mehrteilig, insbesondere zweiteilig, ist und/oder dass der Haltekörper (70) einen Klemmkörper zum Verklemmen in der Halteausnehmung (HA) des zweiten Werkstücks (W1) aufweist oder bildet und/oder dass der Haltekörper (70) mindestens einen Klemmarm (73), insbesondere ein Paar Klemmarme (73), zum Verklemmen in der Halteausnehmung (HA) des zweiten Werkstücks (W1) aufweist, wobei der mindestens eine Klemmarm (73) durch den Zuganker (50) oder einen durch den Zuganker (50) betätigbaren Keilkörper (80) in eine den Haltekörper (70) in der Halteausnehmung (HA) verklemmende Klemmstellung verstellbar ist.

14. Verankerungsbeschlag nach einem der vorhergehenden Ansprüche, **dadurch gekennzeichnet, dass** der Zuganker (50) einen ersten Zuganker (50A) und der Widerlagerkörper (20) einen ersten Widerlagerkörper (20A) bildet und der Verankerungsbeschlag (10) mindestens einen zweiten Zuganker (50B) sowie einen zweiten Widerlagerkörper (20B) Anordnung in einem zweiten Werkstücks (W4) aufweist, wobei erste Zuganker (50A) und der zweite Zuganker (50B) an ihren von den jeweiligen Widerlagerkörpern (20) entfernten Längsendbereichen (57) lösbar miteinander verbindbar sind, insbesondere Schraubverbindungsmittel aufweisen.

15. Verankerungsbeschlag nach einem der vorhergehenden Ansprüche, **dadurch gekennzeichnet, dass** maximaler Außenumfang und/oder eine Umhüllende des Widerlagerkörpers (20) um seine zum Einstecken in die Widerlagerausnehmung (WA) vorgesehene Steckachse (SW) etwa kreisrund ist, sodass der Widerlagerkörper (20) in die Widerlagerausnehmung (WA) einsteckbar ist, wenn diese eine kreisrunde Innenkontur aufweist.

## Claims

1. An anchoring fitting for anchoring in a workpiece (W2), wherein the anchoring fitting (10) comprises a tie rod (50) to be arranged in a connecting recess (VA) of the workpiece (W2) and a buttress body (20) to be arranged in a buttress recess (WA) of the workpiece (W2) communicating with the connecting recess (VA), wherein the buttress body (20) comprises an insertion receptacle (26) for the insertion of an insertion section (52) of the tie rod (50) along an insertion axis (S) and a support surface arrangement for support on the buttress recess (WA) of the workpiece (W2), wherein at least one support surface of the support surface arrangement extends, in particular approximately perpendicularly, transversely to a longitudinal axis (L) of the tie rod (50) inserted into the insertion receptacle (26), so that the tie rod (50) is supported with respect to its longitudinal axis (L) on the buttress recess (WA), wherein the anchoring fitting (10) comprises a clamping body (60) for clamping the insertion section (52) of the tie rod (50) in the insertion receptacle (26), and wherein at least one support body (30) of the anchoring fitting (10) has a flat shape having opposing flat sides and narrow sides, which are rounded in particular, extending between the flat sides for formfitting support at least in sections in the connecting recess (VA) or the buttress recess (WA) of the workpiece (W2), wherein the insertion receptacle (26), transversely to the insertion axis (S), has an alignment transverse width (Q), which is suitable for aligning the tie rod (50) with respect to the buttress body (20), and which is greater than a movement play (BS) necessary for the insertion of the tie rod (50) into the insertion receptacle (26), **characterized in that** the at least one support body (30) comprises a buttress body receptacle (41) for the buttress body (20), in which the buttress body (20) engages in the assembled state of the anchoring fitting.

2. The anchoring fitting (10) as claimed in claim 1, **characterized in that** the clamping body (60) is adjustable with respect to the buttress body (20) along a clamping axis (K), which is in particular perpendicular to the insertion axis (S), wherein the alignment transverse width (Q) extends transversely to the clamping axis (K), and/or in that the alignment transverse width (Q) is at least 5%, preferably approximately 10%, more preferably approximately 20% or 30% greater than a transverse width of the insertion section (52) of the tie rod (50).

3. The anchoring fitting as claimed in any one of the preceding claims, **characterized in that** the insertion receptacle (26) has a transverse height (H), which is angled, in particular perpendicularly, to each of the alignment transverse width (Q) and the insertion axis (S), and the dimension of which is sufficient to insert the tie rod (50) into the insertion receptacle (26), wherein the transverse height (H) is less in relation to a height of the insertion section (52) than the alignment transverse width (Q) is in relation to a width of the insertion section (52), and/or **in that** the clamping body (60) comprises at least one clamping inclination (64), in particular a clamping cone, on its side, in particular end side, facing toward the insertion section (52) of the tie rod (50) and/or **in that** the clamping body (60) comprises a clamping screw or is formed by a clamping screw and/or comprises a screw section (58) to be screwed into the buttress body (20).

4. The anchoring fitting as claimed in any one of the preceding claims, **characterized in that** the clamping body (60) is opposite to a base surface (28) of the insertion receptacle (26), and/or **in that** the insertion receptacle (26) comprises a base surface (28) provided for the contact of the insertion section (52) of the tie rod (50).

5. The anchoring fitting as claimed in claim 4, **characterized in that** the base surface (28) and/or a contact surface (52A) of the insertion section (52) of the tie rod (50) for contact on the base surface (28) is a planar surface or flat surface and/or **in that** the insertion receptacle (26) is wider than the base surface (28) in a region between the clamping body (60) and the base surface (28) to provide an alignment transverse width (Q), and/or **in that** the insertion receptacle (26) comprises a support surface, which is opposite to the base surface (28) and is formed in particular as a planar surface and/or **in that** the insertion receptacle (26) comprises side wall surfaces (29), which are in particular curved, extending diagonally outward from the base surface (28).

6. The anchoring fitting as claimed in any one of the preceding claims, **characterized in that** the insertion section (52) of the tie rod (50) comprises a contact surface (52A) for contact on a base surface (28) of the insertion receptacle (26) and comprises at least one projection (52B) protruding in a plane parallel to the contact surface (52A), which projection protrudes in front of the contact surface (52A) in the direction of the alignment transverse width (Q), and/or **in that** the support surface arrangement of the buttress body (20) comprises at least two support surfaces, which are provided on opposing sides and are provided for the support transversely, in particular approximately perpendicularly transversely, to the longitudinal axis (L) of the tie rod (50) on the buttress recess (WA) and/or **in that** the support surface arrangement of the buttress body (20) comprises at least one support rib (23A) and/or a rib structure to engage in a workpiece (W2) in the region of the buttress recess (WA).

7. The anchoring fitting as claimed in any one of the preceding claims, **characterized in that** twist-lock contours for the twist-locked accommodation of the buttress body (20) in the buttress body receptacle (41) are provided on the buttress body receptacle (41) and/or the buttress body (20).

8. The anchoring fitting as claimed in any one of the preceding claims, **characterized in that** the buttress body receptacle (41) is arranged on at least one flat side (34) or extends between the flat sides (34) of the support body (30), and/or **in that** the buttress body (20) protrudes from the support body (30) on at least one side, preferably on opposing sides, in the state assembled on the support body (30), and/or **in that** the buttress body receptacle (41) is provided between forked protruding arms (40) of the support body (30), wherein it is advantageously provided that a linear guide (39), in particular a guide groove or a guide projection, for inserting the buttress body (20) into the buttress body receptacle (41) is provided on at least one arm (40), advantageously on both arms (40) of the support body (30), wherein the buttress body (20) comprises guide contours (27) matching with the linear guide (39).

9. The anchoring fitting as claimed in any one of the preceding claims, **characterized in that** the support body (30) comprises a passage opening for the tie rod (50), wherein the passage opening has a transverse width enabling an alignment of the tie rod (50) in the insertion receptacle (26) at least in the region of the buttress body (20), which width is preferably equal to or greater than the alignment transverse width (Q) of the insertion receptacle (26) of the buttress body (20), and/or **in that** the at least one support body (30) provides or is formed as a support body (30) to be arranged in the connecting recess (VA).

10. The anchoring fitting as claimed in any one of the preceding claims, **characterized in that** the tie rod (50) comprises at least one rotary driving contour (54, 55), in particular a hexagon contour, for an assembly tool, in particular a hex wrench and/or an assembly socket or an assembly wrench, wherein it is advantageously provided that the rotary driving contour (54, 55) is arranged on an outer circumference of the tie rod (50), in particular in the region of the insertion section (52).

11. The anchoring fitting as claimed in any one of the preceding claims, **characterized in that** the tie rod (50) comprises a screw section (58), in particular to be screwed into on anchoring body, wherein the screw section (58) and the insertion section (52) are arranged on opposing longitudinal end regions of the tie rod (50).

12. The anchoring fitting as claimed in any one of the preceding claims, **characterized in that** it comprises an inclined surface arrangement (53) between the tie rod (50) and the clamping body (60) for the longitudinal adjustment of the tie rod (50) with respect to the buttress body (20) in the direction of the longitudinal axis (L) of the tie rod (50), wherein it is advantageously provided that the inclined surface arrangement (53) comprises at least one positioning inclination (53A, 53B), extending obliquely to the longitudinal axis (L) of the tie rod (50), in particular positioning inclinations (53A, 53B) extending at an angle to one another in the meaning of a depression or a projection, on the tie rod (50) and/or the clamping body (60) and/or that the inclined surface arrangement (53) extends transversely to the longitudinal axis (L) of the tie rod (50) with a transverse width, which enables an alignment of the tie rod (50) with respect to the buttress body (20) in the region of the alignment transverse width (Q) of the insertion receptacle (26).

13. The anchoring fitting as claimed in any one of the preceding claims, **characterized in that** the buttress body (20) is provided for anchoring the anchoring fitting in a first workpiece (W2) and the anchoring fitting (10) comprises at least one retaining body (70) for fastening in a retaining recess (HA) of a second workpiece (W1), wherein the retaining body (70) is connected to the tie rod (50) and/or fastening means, in particular screw means, are provided on the tie rod (50) and the retaining body (70) for the detachable fastening of the tie rod (50) on the retaining body (70) and/or the retaining body (70) comprises a passage opening (76) for at least one portion of the tie rod (50), wherein it is advantageously provided that the retaining body (70) has a flat shape having flat sides (74) opposite to one another and narrow sides (72), which are rounded in particular, extending between the flat sides (74) for the formfitting support at least in sections in the retaining recess (HA) and/or is in multiple parts, in particular two parts, and/or that the retaining body (70) comprises or forms a clamping body for clamping in the retaining recess (HA) of the second workpiece (W1) and/or that sthe retaining body (70) comprises at least one clamping arm (73), in particular a pair of clamping arms (73), for clamping in the retaining recess (HA) of the second workpiece (W1), wherein the at least one clamping arm (73) is adjustable by the tie rod (50) or a wedge body (80) actuatable by the tie rod (50) in a clamped position clamping the retaining body (70) in the retaining recess (HA).

14. The anchoring fitting as claimed in any one of the preceding claims, **characterized in that** the tie rod (50) forms a first tie rod (50A) and the buttress body (20) forms a first buttress body (20A) and the anchoring fitting (10) comprises at least one second tie rod (50B) and one second buttress body (20B) to be arranged in a second workpiece (W4), wherein the first tie rod (50A) and the second tie rod (50B) are detachably connectable to one another at the longitudinal end regions (57) thereof remote from the respective buttress bodies (20), in particular comprise screw connection means.

15. The anchoring fitting as claimed in any one of the preceding claims, **characterized in that** the maximum outer circumference and/or an envelope of the buttress body (20) around its insertion axis (SW) provided for insertion into the buttress recess (WA) is approximately circular, so that the buttress body (20) is insertable into the buttress recess (WA) if it has a circular inner contour.

## Revendications

1. Armature d'ancrage pour l'ancrage dans une pièce (W2), dans laquelle l'armature d'ancrage (10) présente un tirant d'ancrage (50) à disposer dans un évidement de liaison (VA) de la pièce (W2) et un corps de butée (20) à disposer dans un évidement de butée (WA) de la pièce (W2) communiquant avec l'évidement de liaison (VA), dans laquelle le corps de butée (20) présente un logement d'emboîtement (26) pour l'emboîtement d'une section emboîtable (52) du tirant d'ancrage (50) le long d'un axe d'emboîtement (S) et un ensemble de surfaces d'appui pour l'appui sur l'évidement de butée (WA) de la pièce (W2), dans laquelle au moins une surface d'appui de l'ensemble de surfaces d'appui, s'étend, en particulier sensiblement à angle droit, transversalement par rapport à un axe longitudinal (L) du tirant d'ancrage (50) emboîté dans le logement d'emboîtement (26), de sorte que le tirant d'ancrage (50) est en appui sur l'évidement de butée (WA) par rapport à son axe longitudinal (L), dans laquelle l'armature d'ancrage (10) présente un corps de serrage (60) pour serrer la section emboîtable (52) du tirant d'ancrage (50) dans le logement d'emboîtement (26), et dans laquelle au moins un corps d'appui (30) de l'armature d'ancrage (10) présente une forme plate avec des côtés plats en vis-à-vis et des petits côtés, en particulier arrondis, s'étendant entre les côtés plats, pour l'appui par coopération de formes au moins sur certaines sections dans l'évidement de liaison (VA) ou l'évidement de butée (WA) de la pièce (W2), dans laquelle le logement d'emboîtement (26) présente transversalement par rapport à l'axe d'emboîtement (S) une largeur transversale d'orientation (Q) adaptée pour orienter le tirant d'ancrage (50) par rapport au corps de butée (20), qui est plus grande qu'un jeu de mouvement (BS) nécessaire pour l'emboîtement du tirant d'ancrage (50) dans le logement d'emboîtement (26), et **caractérisée en ce que** l'au moins un corps d'appui (30) présente un logement de corps de butée (41) pour le corps de butée (20), dans lequel s'insère le corps de butée (20) dans l'état monté de l'armature d'ancrage.

2. Armature d'ancrage (10) selon la revendication 1, **caractérisée en ce que** le corps de serrage (60) peut être déplacé par rapport au corps de butée (20) le long d'un axe de serrage (K), en particulier à angle droit par rapport à l'axe d'emboîtement (S), dans laquelle la largeur transversale d'orientation (Q) s'étend transversalement par rapport à l'axe de serrage (K), et/ou que la largeur transversale d'orientation (Q) est d'au moins 5 %, de préférence de sensiblement 10 %, plus préférablement de sensiblement 20 % ou 30 %, plus grande qu'une largeur transversale de la section emboîtable (52) du tirant d'ancrage (50).

3. Armature d'ancrage selon l'une quelconque des revendications précédentes, **caractérisée en ce que** le logement d'emboîtement (26) présente une hauteur transversale (H) respectivement angulaire, en particulier à angle droit, par rapport à la largeur transversale d'orientation (Q) et par rapport à l'axe d'emboîtement (S), dont la dimension est suffisante pour emboîter le tirant d'ancrage (50) dans le logement d'emboîtement (26), dans laquelle la hauteur transversale (H) rapportée à une hauteur de la section emboîtable (52) est plus petite que la largeur transversale d'orientation (Q) rapportée à une largeur de la section emboîtable (52), et/ou que le corps de serrage (60) présente au moins un chanfrein de serrage (64), en particulier un cône de serrage, sur son côté tourné vers la section emboîtable (52) du tirant d'ancrage (50), en particulier côté frontal, et/ou que le corps de serrage (60) comprend une vis de serrage ou est formé par une vis de serrage et/ou présente une section filetée (58) à visser dans le corps de butée (20).

4. Armature d'ancrage selon l'une quelconque des revendications précédentes, **caractérisée en ce que** le corps de serrage (60) est en vis-à-vis d'une surface de fond (28) du logement d'emboîtement (26) et/ou que le logement d'emboîtement (26) présente une surface de fond (28) prévue pour le support de la section emboîtable (52) du tirant d'ancrage (50).

5. Armature d'ancrage selon la revendication 4, **caractérisée en ce que** la surface de fond (28) et/ou une surface de support (52A) de la section emboîtable (52) du tirant d'ancrage (50) pour le support sur la surface de fond (28) est une surface plane ou surface plate et/ou que le logement d'emboîtement (26) pour la fourniture de la largeur transversale d'orientation (Q) dans une zone entre le corps de serrage (60) et la surface de fond (28) est plus large que la surface de fond (28) et/ou que le logement d'emboîtement (26) présente une surface d'appui en vis-à-vis de la surface de fond (28), en particulier conçue comme une surface plane, et/ou que le logement d'emboîtement (26) présente des surfaces de paroi latérales (29) s'étendant à partir de la surface de fond (28) de manière inclinée vers l'extérieur, en particulier de manière courbée.

6. Armature d'ancrage selon l'une quelconque des revendications précédentes, **caractérisée en ce que** la section emboîtable (52) du tirant d'ancrage (50) présente une surface de support (52A) pour le support sur une surface de fond (28) du logement d'emboîtement (26) et présente au moins une saillie (52B) faisant saillie dans un plan parallèle à la surface de support (52A), qui fait saillie de la surface de support (52A) en direction de la largeur transversale d'orientation (Q), et/ou que l'ensemble de surfaces d'appui du corps de butée (20) présente au moins deux surfaces d'appui, qui sont prévues sur des côtés opposés l'un à l'autre et sont prévues pour l'appui transversalement, en particulier sensiblement à angle droit transversalement, à l'axe longitudinal (L) du tirant d'ancrage (50) sur l'évidement de butée (WA), et/ou que l'ensemble de surfaces d'appui du corps de butée (20) présente au moins une nervure d'appui (23A) et/ou une structure nervurée pour l'insertion dans la pièce (W2) dans la zone de l'évidement de butée (WA).

7. Armature d'ancrage selon l'une quelconque des revendications précédentes, **caractérisée en ce que** des contours de blocage en rotation pour la réception bloquée en rotation du corps de butée (20) dans le logement de corps de butée (41) sont présents sur le logement de corps de butée (41) et/ou le corps de butée (20).

8. Armature d'ancrage selon l'une quelconque des revendications précédentes, **caractérisée en ce que** le logement de corps de butée (41) est disposé sur au moins un côté plat (34) ou s'étend entre les côtés plats (34) du corps d'appui (30) et/ou que le corps de butée (20) sur au moins un côté, de préférence sur les côtés opposés l'un à l'autre, fait saillie du corps d'appui (30) dans l'état monté sur le corps d'appui (30) et/ou que le logement de corps de butée (41) est prévu entre les bras (40) du corps d'appui (30) faisant saillie en forme de fourche, dans laquelle il est prévu de manière avantageuse qu'un guidage linéaire (39), en particulier une rainure de guidage ou une saillie de guidage, pour l'introduction du corps de butée (20) dans le logement de corps de butée (41) soit prévu sur au moins un bras (40), de manière avantageuse sur les deux bras (40), du corps d'appui (30), dans laquelle le corps de butée (20) présente des contours de guidage (27) ajustés au guidage linéaire (39).

9. Armature d'ancrage selon l'une quelconque des revendications précédentes, **caractérisée en ce que** le corps d'appui (30) présente une ouverture de passage pour le tirant d'ancrage (50), dans laquelle l'ouverture de passage présente au moins dans la zone du corps de butée (20) une largeur transversale permettant une orientation du tirant d'ancrage (50) dans le logement d'emboîtement (26), qui est de préférence au moins aussi grande que ou plus grande que la largeur transversale d'orientation (Q) du logement d'emboîtement (26) du corps de butée (20), et/ou que l'au moins un corps d'appui (30) est prévu ou conçu un corps d'appui (30) à disposer dans l'évidement de liaison (VA).

10. Armature d'ancrage selon l'une quelconque des revendications précédentes, **caractérisée en ce que** le tirant d'ancrage (50) présente au moins un contour d'entraînement en rotation (54, 55), en particulier un contour hexagonal, pour un outil de montage, en particulier une clé à six pans creux et/ou une noix de montage ou une clé de montage, dans laquelle il est prévu de manière avantageuse que le contour d'entraînement en rotation (54, 55) soit disposé sur une périphérie extérieure du tirant d'ancrage (50), en particulier dans la zone de la section emboîtable (52).

11. Armature d'ancrage selon l'une quelconque des revendications précédentes, **caractérisée en ce que** le tirant d'ancrage (50) présente une section filetée (58), en particulier à visser dans un corps d'ancrage, dans laquelle la section filetée (58) et la section emboîtable (52) sont disposées sur les zones d'extrémité longitudinales du tirant d'ancrage (50) opposées l'une à l'autre.

12. Armature d'ancrage selon l'une quelconque des revendications précédentes, **caractérisée en ce qu'**elle présente un ensemble de surfaces inclinées (53) entre le tirant d'ancrage (50) et le corps de serrage (60) par rapport au réglage en longueur du tirant d'ancrage (50) par rapport au corps de butée (20) en direction de l'axe longitudinal (L) du tirant d'ancrage (50), dans laquelle il est prévu de manière avantageuse que l'ensemble de surfaces inclinées (53) comprenne au moins un chanfrein de réglage (53A, 53B) s'étendant de manière inclinée par rapport à l'axe longitudinal (L) du tirant d'ancrage (50), en particulier des chanfreins de réglage (53A, 53B) s'étendant de manière angulaire l'un vers l'autre au sens d'un creux ou d'une saillie, sur le tirant d'ancrage (50) et/ou le corps de serrage (60) et/ou que l'ensemble de surfaces inclinées (53) s'étende transversalement par rapport à l'axe longitudinal (L) du tirant d'ancrage (50) avec une largeur transversale qui permet une orientation du tirant d'ancrage (50) par rapport au corps de butée (20) dans la zone de la largeur transversale d'orientation (Q) du logement d'emboîtement (26).

13. Armature d'ancrage selon l'une quelconque des revendications précédentes, **caractérisée en ce que** le corps de butée (20) est prévu pour l'ancrage de l'armature d'ancrage dans une première pièce (W2) et l'armature d'ancrage (10) présente au moins un corps de retenue (70) pour la fixation dans un évidement de retenue (HA) d'une deuxième pièce (W1), dans laquelle le corps de retenue (70) est relié au tirant d'ancrage (50) et/ou des moyens de fixation, en particulier des moyens de vissage, pour la fixation libérable du tirant d'ancrage (50) sur le corps de retenue (70) sont présents sur le tirant d'ancrage (50) et le corps de retenue (70) et/ou le corps de retenue (70) présente une ouverture de passage (76) pour au moins une section partielle du tirant d'ancrage (50), dans laquelle il est prévu de manière avantageuse que le corps de retenue (70) présente une forme plate avec des côtés plats (74) en vis-à-vis et des petits côtés (72), en particulier arrondis, s'étendant entre les côtés plats (74), pour l'appui par coopération de formes au moins sur certaines sections dans l'évidement de retenue (HA) et/ou est en plusieurs parties, en particulier en deux parties, et/ou que le corps de retenue (70) présente ou forme un corps de serrage pour le serrage dans l'évidement de retenue (HA) de la deuxième pièce (W1) et/ou que le corps de retenue (70) présente au moins un bras de serrage (73), en particulier une paire de bras de serrage (73), pour le serrage dans l'évidement de retenue (HA) de la deuxième pièce (W1), dans laquelle l'au moins un bras de serrage (73) peut être déplacé par le tirant d'ancrage (50) ou un corps cunéiforme (80) pouvant être actionné par le tirant d'ancrage (50) dans une position de serrage serrant le corps de retenue (70) dans l'évidement de retenue (HA).

14. Armature d'ancrage selon l'une quelconque des revendications précédentes, **caractérisée en ce que** le tirant d'ancrage (50) forme un premier tirant d'ancrage (50A) et le corps de butée (20) un premier corps de butée (20A) et l'armature d'ancrage (10) présente au moins un deuxième tirant d'ancrage (50B) ainsi qu'un deuxième corps de butée (20B) disposition dans une deuxième pièce (W4), dans laquelle premier tirant d'ancrage (50A) et le deuxième tirant d'ancrage (50B) peuvent être reliés l'un à l'autre de manière détachable sur leurs zones d'extrémité longitudinales (57) espacées du corps de butée (20) respectif, en particulier présentent des moyens de liaison vissée.

15. Armature d'ancrage selon l'une quelconque des revendications précédentes, **caractérisée en ce que** la périphérie extérieure maximale et/ou une enveloppante du corps de butée (20) autour de son axe d'emboîtement (SW) prévu pour l'emboîtement dans l'évidement de butée (WA) est sensiblement circulaire, de sorte que le corps de butée (20) peut être emboîté dans l'évidement de butée (WA), lorsque celui-ci présente un contour intérieur circulaire.
